## Europäisches Patentamt

## European Patent Office

## Office européen des brevets

(11) Veröffentlichungsnummer: **0 171 383**
**B1**

(12) ## EUROPÄISCHE PATENTSCHRIFT

(45) Veröffentlichungstag der Patentschrift:
**18.01.89**

(51) Int. Cl.⁴: **G 01 D 5/245,** G 01 B 7/02

(21) Anmeldenummer: **85890140.8**

(22) Anmeldetag: **25.06.85**

(54) Inkrementales Messsystem.

(30) Priorität: **06.07.84 AT 2175/84**

(43) Veröffentlichungstag der Anmeldung:
**12.02.86 Patentblatt 86/7**

(45) Bekanntmachung des Hinweises auf die Patenterteilung:
**18.01.89 Patentblatt 89/3**

(84) Benannte Vertragsstaaten:
**BE CH DE FR GB IT LI LU NL SE**

(56) Entgegenhaltungen:
**EP-A- 0 085 787**
**EP-A- 0 118 673**
**DE-A- 2 730 715**
**GB-A- 2 001 786**
**GB-A- 2 065 872**
**US-A- 4 128 481**

(73) Patentinhaber: **RSF-Elektronik Gesellschaft m.b.H.,**
**A-5121 Tarsdorf 93 (AT)**

(72) Erfinder: **Rieder, Heinz, Riedersbach 90, A-5120 St.**
**Pantaleon (AT)**
Erfinder: **Schwaiger, Max, A-5121 Ostermiething**
**Nr. 298 (AT)**

(74) Vertreter: **Hübscher, Gerhard, Dipl.-Ing. et al,**
**Patentanwälte Dipl.-Ing. Gerhard Hübscher Dipl.-Ing.**
**Helmut Hübscher Dipl.-Ing. Heiner Hübscher**
**Spittelwiese 7, A-4020 Linz (AT)**

ACTORUM AG

## Beschreibung

Die Erfindung betrifft ein inkrementales Messsystem nach dem einleitenden Teil von Anspruch 1.

Inkrementale Messsysteme dieser Art können sowohl als Winkel- als auch als Längenmesssysteme ausgebildet sein. Die Massstabverkörperung und auch die Referenzmarke bzw. -marken sind abhängig von der Ausbildung dieser Massstabverkörperung und der Abtasteinheit nach optoelektronischen, induktiven, magnetischen oder kapazitiven Abtastprinzipien abtastbar, wobei meist bei der Abtastung der Massstabverkörperung in ihrer Grundform sinusförmige Analogsignale als Messignal erhalten werden, bei denen jeweils ein vollständiger Signalzug einem vollständigen Massstabinkrement zugeordnet ist, das bei optoelektronischer Abtastung aus je einem Hell- und einem Dunkelfeld, z. B. einem Teilstrich und einem Zwischenraum, bestehen kann. Unter dem Begriff «inkrementales Messsystem» werden auch absolute Messsysteme mit codierten Teilungsspuren verstanden, bei denen die feinst auflösende Teilungsspur eine Inkrementalspur ist. Bei der Abtastung werden meist wenigstens zwei, beispielsweise um 90° phasenverschobene Messignale erhalten. Abhängig von der Verstellrichtung der Abtasteinheit eilt das eine oder andere Signal vor und es ist daher möglich, über einen Richtungsdiskriminator aus den Signalen die Verstellrichtung der Abtasteinheit festzustellen. Die analogen Messignale werden in der Auswerteeinheit in zählbare Digitalsignale verarbeitet, wobei es Schaltungen mit Austriggerung der Nulldurchgänge der phasenverschobenen Messignale und Schaltungen mit weiterer elektronischer oder rechnerischer Unterteilung des Massstabes gibt, welch letztere Schaltungen meist mit einem Mikroprozessor oder Mikrocomputer arbeiten. Die digitalen Zählsignale können als Steuersignale für eine Anzeigeeinheit verwendet werden, auf der das jeweilige, z. B. auf einen gewählten Nullpunkt bezogene Messergebnis aufscheint. Man kann die digitalen Zählsignale auch als Steuersignale bzw. Positioniersignale einer Bahnsteuerung einer Werkzeugmaschine verwenden bzw. bei Industrierobotern usw. zur Positionsbestimmung einsetzen.

Durch Verwendung einer oder mehrerer Referenzmarken wird es möglich, einen oder mehrere Bezugspunkte des inkrementalen Messsystems absolut festzulegen. Beim Überfahren der Referenzmarke wird in der Abtasteinheit ein einem ganz bestimmten Massstabinkrement zugeordneter Impuls erhalten, dessen Dauer gleich oder kürzer ist, wie die Dauer eines vom Massstabinkrement abgeleiteten Signales. Das Referenzsignal kann zum Starten, Nullen oder Setzen der Auswerte- oder Anzeigeeinheit eingesetzt werden. Man kann mit Hilfe des Referenzsignales einen Vor-Rückwärtszähler der Auswerteeinheit setzen, starten oder anhalten. Durch das Referenzsignal lassen sich die erhaltenen Messergebnisse auf absolute Referenzpunkte beziehen, so dass das Inkrementalsystem zum quasi absoluten System wird.

Inkrementale Messsysteme der eingangs genannten Art sind aus der GB-B-20 65 872 und aus der DE-A-32 45 357 bekannt. Bei diesen Messsystemen sind in einer gemeinsamen Spur der Massstabverkörperung mehrere Referenzmarken vorgesehen. In einer weiteren, meist an der anderen Seite der Messteilung vorgesehenen Spur sind Aktivierungsmarken, mechanische Anschläge oder Dauermagnete vorgesehen oder anbringbar. Mit Hilfe dieser Aktivierungselemente und zugeordneter Schalteinrichtungen wird es möglich, eine Auswahl zu treffen, um aus der Vielzahl der vorhandenen Referenzmarken und der von ihnen abgeleiteten Referenzsignale nur bestimmt auszuwählen und der weiteren Verarbeitung zuzuführen. Die vorgesehenen Aktivierungselemente dienen also nur zur Steuerung der Auswerteeinheit des Messystems und erfüllen sonst keine weiteren Aufgaben.

Bei Bahnsteuerungen für Werkzeugmaschinen usw. ist es bekannt, die von den Messignalen abgeleiteten digitalen Zählsignale für die Steuerung auszunützen. Man kann mit Hilfe eines Werkzeuges abzuarbeitende Teilbereiche eines Werkstükes unter Zuhilfenahme eines Rechners in Speicherwerte umsetzen, die auf absolute oder gewählte Massstabpunkte bezogen sind und aus den jeweils einlangenden Zählsignalen die momentane Werkzeugstellung feststellen bzw. das Werkzeug mit Hilfe dieser Zählsignale einstellen. Bei einer bekannten Steuerung wird eine zu errichtende Sollposition vorgespeichert und es wird errechnet, welchen Weg das Werkzeug bis zum Erreichen dieser Sollposition zurückzulegen hat. Dieser zurückzulegende Weg wird festgehalten und von diesem Wert wird aufgrund der Zählsignale entsprechend der Bewegung des Werkzeuges die Differenz gebildet, bis die Sollposition erreicht ist. Hier erzeugt der Rechner ein Signal, das den nächsten Arbeitsschritt einleitet. Bei Werkzeugmaschinen und Robotern ist es überdies bekannt, bestimmte Verfahrstellungen eines Werkzeugschlittens, Werkzeugträgers oder Supports die nicht überfahren werden dürfen oder in deren Bereich eine Bewegungsumkehr stattfinden soll, mit Hilfe gesonderter Anschlagschalter festzulegen. Es gibt sowohl mechanische Anschlagschalter als auch berührungslos abtastbare Anschlagschalter, wie Lichtschranken, Annäherungsschalter, von Magneten betätigte ReadRelais usw. Die zusätzlich betätigten Anschlagschalter erhöhen den Gesamtaufwand bei der Werkzeugmaschine und sind oft nur unter erheblichen Schwierigkeiten überhaupt anbringbar. Eine nachträgliche Anbringung solcher Anschlagschalter oder eine Änderung der durch die Anschläge bestimmten Schaltstellen ist in vielen Fällen nahezu ausgeschlossen.

Aufgabe der Erfindung ist die Schaffung eines inkrementalen Messsystems der genannten Art, bei dem mit einfachen Mitteln zusätzlich zu den Messaufgaben auch die Funktionen von Schalteinrichtungen einer Maschinensteuerung, insbesondere von Anschlagschaltern, realisiert werden können.

Die gestellt Aufgabe wird durch die Merkmale des Patentanspruches 1 gelöst.

Es können somit zusätzliche Anschlagschalter mit ihren Unterbringungsproblemen und ihrer Störanfälligkeit entfallen. Meist sind die zusätzlichen Aktivierungselemente Teile einer berührungslos betätigbaren Maschinensteuereinrichtung.

Die Steuermarken können dabei als über mehrere Massstabinkremente gleichbleibend durchgehende Marken oder Spurteile ausgebildet sein.

Im einfachsten Fall bildet der Diskriminator eine Weiche, die ein bei der Abtastung erhaltenes Signal aus der Referenzspur dann, wenn dieses Signal nur über die Abtastung eines Inkrements anhält, als Referenzimpuls der entsprechenden Auswertschaltung weiterleitet, also dem Messystem zuordnet, aber ein über zwei oder mehrere Massstabinkremente bzw. eine entsprechende Anzahl von Zählsignalen anhaltendes, an der Abtasteinheit für die Referenzspur auftretendes Signal als Steuersignal identifiziert und dem Steuerausgang des Messystems bzw. einer diesem Ausgang vorgeordneten Formierstufe zuführt. Es können also ohne wesentliche Erhöhung des Schaltungsaufwandes und des Gesamtaufwandes an einer einzigen Referenzspur sowohl Referenzimpulse erzeugt und wie bisher ausgewertet als auch Steuersignale erzeugt werden, die man dann wie bisher sonst die Signale von Anschlagschaltern zum Stoppen oder Umschalten der Antriebseinrichtung der Maschinensteuerung verwenden kann.

Die Steuermarken werden in den meisten Fällen gleich bei der Herstellung des Massstabes angebracht. Es ist aber auch die Möglichkeit vorhanden, Marken zu verwenden, die aus auf der Referenzmarkenspur des Massstabes befestigbaren Elementen bestehen, welche Elemente entsprechend den jeweiligen Bedürfnissen angebracht und umgesetzt werden können.

Weitere Einzelheiten und Vorteile des Erfindungsgegenstandes gehen aus der nachfolgenden Zeichnungsbeschreibung hervor.

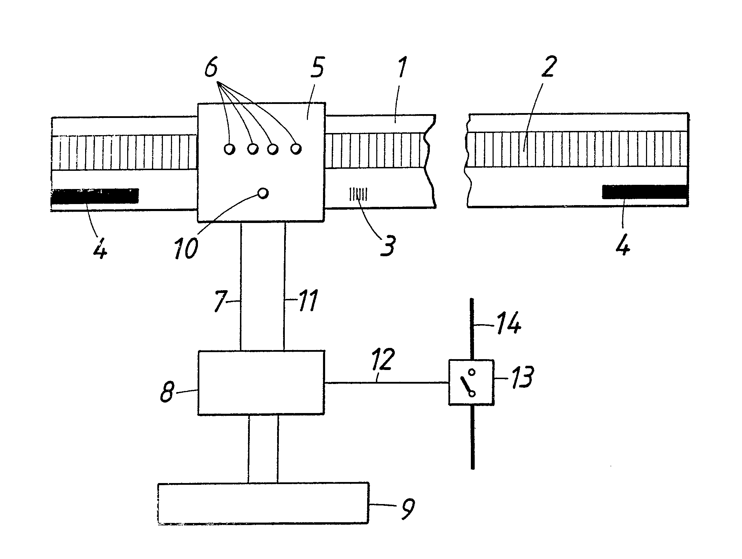

In der Zeichnung ist ein erfindungsgemässes Messystem in stark schematisierter Darstellungsweise veranschaulicht.

Ein Massstab 1 ist mit einer z. B. als Inkrementalteilung ausgebildeten Massstabverkörperung 2 versehen. Neben dieser Massstabverkörperung ist in einer weiteren Abtastspur eine Referenzmarke 3 vorgesehen. Beim Ausführungsbeispiel wurde angenommen, dass zusätzlich zu der Referenzmarke im Bereich der Massstabenden Steuermarken 4 vorgesehen sind, wobei diese Steuermarken im Zusammenwirken mit weiteren noch zu beschreibenden Einheiten die Funktion von Anschlagschaltern erfüllen. Eine optoelektronische Abtasteinheit 5 besitzt lichtempfindliche Elemente 6, die durch die Messteilung 2 und durch gegeneinander um Massstabbruchteile versetzte Gitter hindurch beleuchtet werden, so dass bei der Längsverstellung der Abtasteinheit 5 am Massstab in ihrer Grundform sinusförmige Abtastsignale erhalten werden, die gegeneinander phasenverschoben sind und aus denen nachdem sie über eine Leitung 7 einer Auswerteeinheit 8 zugeführt wurden, Richtungserkennungssignale und Zählsignale erzeugt werden, die zur Steuerung eines Zählers oder einer Anzeigeeinheit 9 Verwendung finden können.

Für die Referenzmarke 3 ist in der Abtasteinheit ein eigenes lichtempfindliches Element 10 mit entsprechendem Abtastgitter vorgesehen, so dass in einer ganz bestimmten Relativstellung des Abtastgitters zur Marke 3 ein Referenzimpuls erzeugt wird, der über eine Leitung 11 der Auswerteeinheit 8 zugeführt wird und z. B. zum Starten, Setzen oder Anhalten des Zählers oder der Anzeigeeinheit 9 Verwendung finden kann. In der Auswerteeinheit 8 ist auch ein Diskriminator vorgesehen, der beispielsweise durch Feststellung der Anzahl der Zählsignale über die ein am lichtempfindlichen Element 10 erhaltenes Signal anhält, feststellt, ob das lichtempfindliche Element 10 durch die Referenzmarke 3 beaufschlagt wird oder sich im Bereich einer der beiden Steuermarken 4 befindet. Um welche Steuermarke es sich handelt, ergibt sich aus der Zählrichtung bzw. dem Zählerstand. Ein diskriminiertes, an einer der Marken 4 erzeugtes Signal wird über einen zusätzlichen Ausgang der Auswerteeinheit auf eine Steuerleitung 12 gelegt und kann zur Betätigung eines Schalters 13 in einer Steuerleitung 14 für einen Maschinenmotor verwendet werden.

**Patentansprüche**

1. Inkrementales Messystem mit einem Massstab (1), auf dem eine die Massstabverkörperung darstellende Messteilung (2) vorgesehen ist, einer Abtasteinheit mit Abtastelementen (6) für die Messteilung zur Erzeugung von Messignalen und einer Auswerteeinheit zur Erzeugung von digitalen Zählsignalen aus den Messignalen, wobei auf dem Massstab (1) neben der Messteilung (2) eine weitere Spur mit wenigstens einer einer bestimmten Massstabstelle zugeordneten Referenzmarke (3) vorgesehen ist und die Abtasteinheit (5) wenigstens ein Abtastelement für die Referenzmarke (3) bzw. Referenzmarken aufweist, das bei der Ausrichtung auf eine Referenzmarke (3) ein über die Auswerteeinheit (8) die Zähl- oder Anzeigeeinheit (9) steuerndes Signal erzeugt, wobei weitere Aktivierungselemente (4) für die Bestätigung von Schaltelementen (13) vorgesehen sind, dadurch gekennzeichnet, dass die auf dem Massstab (1) neben der Messteilung (2) vorgesehenen zusätzlichen Aktivierungselemente (4) als auf der Spur für die Referenzmarke (3) bzw. Referenzmarken vorgesehene Steuermarken ausgebildet sind und als Aktivierungselemente für mit der Abtasteinheit (5) verstellbare Schalteinrichtung (13) einer Maschinensteuerung dienen, zu welchem Zweck die Auswerteeinheit (8) einen zwischen den von der Referenzmarke (3) abgeleiteten Referenzsignalen und den von den Steuermarken (4) abgeleiteten Signalen unterscheidenden Diskriminator enthält, der die von den Steuermarken (4) abgeleiteten Signale an einen an die Maschinensteuerung (13, 14) angeschlossenen Ausgang des Messystems legt, so dass sie als Stillsetz- oder Umsteuersignale für die Maschinensteuerung auswertbar sind.

2. Inkrementales Messystem nach Anspruch 1, dadurch gekennzeichnet, dass die Steuermarken (4) als über mehrere Massstabinkremente gleichbleibend durchgehende Marken oder Spurteile ausgebildet sind.

3. Inkrementales Messystem nach den Ansprüchen 1 und 2, dadurch gekennzeichnet, dass die Steuermarken (4) aus auf der Referenzmarkenspur des Massstabes (1) befestigbaren Elementen bestehen.

**Revendications**

1. Système de mesure incrémental comprenant une échelle graduée (1) sur laquelle est prévue une division (2) représentant la matérialisation de l'échelle graduée, une unité de lecture munie d'éléments (6) de lecture, destinée à lire la division pour produire des signaux de mesure, et une unité d'analyse destinée à produire des signaux de comptage numériques à partir des signaux de mesure, cependant qu'il est prévu sur l'échelle graduée (1), en supplément de la division (2), une autre piste munie d'au moins une marque de référence (3) associée à une position déterminée de l'échelle graduée et que l'unité de lecture (5) présente au moins un élément de lecture pour lire la marque de référence (3) ou les marques de référence, élément qui, lorsqu'il est aligné sur une marque de référence (3), produit un signal qui commande l'unité de comptage ou d'affichage (9) par l'intermédiaire de l'unité d'analyse (8), système dans lequel il est prévu d'autres éléments d'activation (4) pour l'actionnement d'éléments de commutation (13), caractérisé par le fait que les éléments d'activation additionnels (4) prévus sur l'échelle graduée (1) à côté de la division de mesure (2) sont constitués par des marques de commande prévues sur la piste qui porte la marque de référence (3) ou les marques de référence et servent d'éléments d'activation pour les dispositifs de commutation (13) d'une commande de machine qui peuvent se déplacer avec l'unité de lecture (5), l'unité d'analyse (8) renfermant à cet effet un discriminateur qui distingue les signaux de référence dérivés de la marque de référence (3) et les signaux dérivés des marques de commande (4), discriminateur qui transmet les signaux dérivés des marques de commande (4) à une sortie du système de mesure qui est connectée à la commande (13, 14) de la machine, de manière que ces signaux puissent être analysés en qualité de signaux d'arrêt ou d'inversion pour la commande de la machine.

2. Système de mesure incrémental selon la revendication 1, caractérisé par le fait que les marques de commande (4) sont constituées par plusieurs marques ou parties de pistes qui se prolongent avec une configuration constante sur plusieurs incrément de l'échelle graduée.

3. Système de mesure incrémental selon les revendications 1 et 2, caractérisé par le fait que les marques de commande (4) sont constituées par des éléments qui peuvent être fixés sur la piste de marques de référence de l'échelle graduée (1).

**Claims**

1. An incremental measuring system comprising a scale member (1) that is provided with gradiations (2) which contitute the scale, a scanning unit comprising scanning elements (6) for scanning the graduations so as to generate output signals, and a processor for deriving countable digital signals from the output signals, wherein the scale member (1) comprises beside the graduations (2) another track including at least one reference mark (3), which is associated with a predetermined point of the scale member, and the scanning unit (5) comprises at least one scanning element for the reference mark (3) or reference marks, which scanning elemet when registering with a reference mark (3) generates a signal which via the processor (8) controls the counting or display unit (9), and additional activating elements (4) for actuating switching elements (13) are provided, characterized in that the additional activating elemets (4) which are provided on the scale member (1) beside the graduation (2) consist of control marks, which are provided on the track for the reference mark (3) or reference mark, the activating elements consist of switching means (13) , which are included in a machine control system and are adjustable with the scanning unit, for that purpose the processor (8) comprises a discriminator, which distinguishes between the reference signals derived from the reference mark (3) and the signals which are derived from the control marks (4), and signals derived from the control marks (4) are delivered by said discriminator to an output of the measuring system, which output in connected to the machine controle system (13, 14) so that they can be utilized as stopping or reversing signals in the machine control system.

2. An incremental measuring system according to claim 1, characterized in that the control marks (4) consist of marks or track sections which extend uniformly along a plurality of scale increments.

3. An incremental measuring system according to claim 1 and 2, characterized in that the control marks (4) consist of elements which are adapted to be fixed to the reference mark track of the scale member (1).